# NEUE EUROPÄISCHE PATENTSCHRIFT

(11) **EP 1 807 272 B2**
(45) Veröffentlichungstag und Bekanntmachung des Hinweises auf die Entscheidung über den Einspruch: **02.03.2011**
(45) Hinweis auf die Patenterteilung: 02.04.2008
(21) Anmeldenummer: 05785660.1
(22) Anmeldetag: 09.09.2005
(51) Int. Cl.: B60H 1/00

(54) **KLIMAANLAGE FÜR KRAFTFAHRZEUGE**
AIR-CONDITIONING UNIT FOR MOTOR VEHICLES
CLIMATISATION DESTINEE A DES VEHICULES

(30) Priorität: 17.09.2004 DE 102004045679
(43) Veröffentlichungstag der Anmeldung: 18.07.2007
(73) Patentinhaber: Spheros GmbH, 82205 Gilching (DE)
(72) Erfinder: BOLTZ, Norbert, 85540 Haar (DE); SCHEID, Helmut, 86920 Denklingen (DE)
(74) Vertreter: Strasser, Wolfgang
(86) Internationale Anmeldenummer: PCT/EP2005/009680
(87) Internationale Veröffentlichungsnummer: WO 2006/032377

(56) Entgegenhaltungen:
- EP-B1- 1 507 672
- EP-B1- 1 667 862
- WO-A1-2005/032865
- US-A- 5 005 372
- US-A- 5 005 372
- US-A1- 2002 073 723
- US-B1- 6 282 912
- US-B1- 6 282 912

## Beschreibung

Die Erfindung betrifft eine Klimaanlage für Kraftfahrzeuge, insbesondere Omnibusse, zur Montage auf einem Dach des Kraftfahrzeugs, mit einem in einem Tragwerk angeordneten Verflüssiger und einem in einem ersten Gehäuse angeordneten ersten Verdampfer und einem in einem zweiten Gehäuse angeordneten zweiten Verdampfer, wobei der Verflüssiger und die Verdampfer quer zur Fahrtrichtung nebeneinander angeordnet sind und das Tragwerk und die Gehäuse durch Verbindungselemente miteinander verbunden sind.

Ein derartige Klimaanlage ist aus der gattungsgemäßen US 2002/0073723 bekannt.

Klimaanlagen der vorstehend genannten Art nach dem Stand der Technik sind wenig flexibel einsetzbar. Dächer von Kraftfahrzeugen, insbesondere Omnibussen, unterscheiden sich sowohl in der Breite als auch im Radius in einem sehr weiten Bereich. Eine Klimaanlage zur Montage auf einem Dach eines Kraftfahrzeugs, insbesondere eines Omnibusses, kann nur auf bestimmte Fahrzeuge hin optimal angepasst werden, während bei anderen Fahrzeugen, die abweichende Dachkonturen aufweisen, Hilfskonstruktionen erforderlich sind, um eine gute und sichere mechanische Befestigung dieser Klimaanlagen auf dem Fahrzeugdach zu erreichen. Dazu werden im Stand der Technik zum Beispiel keilförmige Dichtrahmen oder unterschiedlich beschnittene Abdeckhauben verwendet. Da jedoch auf der anderen Seite die Ansprüche an das ästhetische Erscheinungsbild von Kraftfahrzeugen ständig steigt, müssen verschiedene Varianten von Klimaanlagen mit einem sehr hohen Aufwand hergestellt werden. Dies erfordert, dass viele verschiedene Komponenten vorgehalten werden, wodurch die Wirtschaftlichkeit der Herstellung derartiger Klimaanlagen in Frage gestellt ist.

Klimaanlagen zur Montage auf einem Dach eines Kraftfahrzeugs, insbesondere eines Omnibusses, können einteilig ausgeführt sein oder aus mehreren Modulen bestehen. Im ersten Fall wird durch das hohe Gewicht die Handhabbarkeit der Anlage erheblich erschwert, im zweiten Fall müssen die Module separat auf das Fahrzeug gehoben und dort montiert werden, wobei die fahrzeugseitige Montage deutlich aufwendiger ist. In beiden Fällen besteht weiterhin die Gefahr, dass insbesondere außenliegende Komponente, wie Verrohrung, Halter usw. bei der Montage beschädigt werden.

Um dies zu vermeiden, ist gemäß der nicht vorveröffentlichten DE 103 45 997 A1 vorgesehen, dass zwischen einem zentralen Verflüssigergehäuse und seitlich hiervon angeordneten Verdampfergehäusen vorgesehene Verbindungselemente die relativen Stellungen dieser Gehäuse zueinander so festlegen, dass sich die Klimaanlage einer beliebigen gekrümmten Form des Dachs anpassen lässt.

Die Grundidee der Erfindung besteht darin, dass die Module Verflüssiger und Verdampfer mit dem Tragwerk und den Gehäusen jeweils in einer Grundausführung gefertigt werden und diese Module dann so zusammengesetzt werden, dass eine Vielzahl von Varianten von Klimaanlagen wirtschaftlich hergestellt werden kann.

Gemäß der Erfindung weist das Tragwerk ein Trägerelement auf, das eine Verbindung zwischen dem ersten Gehäuse und dem zweiten Gehäuse bildet. Dies erlaubt, jeweils in Abhängigkeit von den relativen Stellungen des Tragwerks und der Gehäuse zueinander, durch das Trägerelement eine feste Verbindung zwischen dem ersten und dem zweiten Gehäuse auszubilden und die Klimaanlage an jede beliebige Dachbreite und an jeden beliebigen Dachradius anzupassen.

In einer weiteren bevorzugten Ausführungsform ist zwischen dem Tragwerk und dem jeweils benachbarten Gehäuse jeweils eine Lufteintrittsöffnung angeordnet, wobei durch jede der Lufteintrittsöffnungen jeweils ein erster Teilluftstrom zum Verflüssiger und ein zweiter Teilluftstrom zum jeweils zugeordneten Verdampfer gelangt. Durch die Verwendung solcher Lufteintrittsöffnungen für die Luftströme durch den Verflüssiger und den Verdampfer können die Lufteintrittsöffnungen sehr viel kompakter ausgeführt werden als bei getrennter Luftzufuhr. Bei hoher Verflüssigerleistung, das heißt bei hohen Außentemperaturen, wird dem jeweiligen Verdampfer nur ein kleiner zweiter Teilluftstrom zugeführt, der Verdampfer wird überwiegend mit Umluft beaufschlagt. Damit steht fast der volle Querschnitt der Lufteintrittsöffnung für die Ansaugung des ersten Teilluftstroms zum Verflüssiger hin zur Verfügung.

Besonders vorteilhaft ist auch, wenn zwischen dem Tragwerk und dem jeweils zugeordneten Gehäuse jeweils ein Dichtelement und ein Frischluftraum angeordnet sind, wobei jedes Dichtelement den jeweils zugeordneten Frischluftraum nach oben hin abdichtet. Legt des weiteren die Lufteintrittsöffnung, das Tragwerk, das Dichtelement und der Frischluftraum einen Luftströmungsweg fest, wobei erster und zweiter Teilluftstrom über den Luftströmungsweg von der Lufteintrittsöffnung im Tragwerk nach unten gelangen und der zweite Teilluftstrom über den Frischluftraum nach oben in das dem jeweiligen Frischluftraum zugeordnete Gehäuse gelangt, so können damit die Wassertröpfchen besonders gut aus der Frischluft abgeschieden werden. Die Teilluftströme werden nämlich zuerst im Tragwerk stark nach unten beschleunigt und dann nach oben umgelenkt, wodurch bereits die meisten Wassertröpfchen aus den beiden Teilluftströmen entfernt werden. Die schwereren Wassertropfen fallen auf das Dach des Busses und können von dort aus ablaufen.

Weitere Ausführungsformen der Erfindung sind den Unteransprüchen zu entnehmen.

Die Erfindung wird nachfolgend anhand von Ausführungsbeispielen näher erläutert, wobei auf Zeichnungen Bezug genommen wird. Die Zeichnungen zeigen in:
- Fig. 1: eine Aufsicht auf eine erfindungsgemäße Ausführungsform einer Klimaanlage für Kraftfahrzeuge,
- Fig. 2: einen Querschnitt durch eine Klimaanlage für Kraftfahrzeuge in Richtung auf die Linie II-II der Fig. 1, und
- Fig. 2a: einen Ausschnitt IIa aus der Fig. 2.

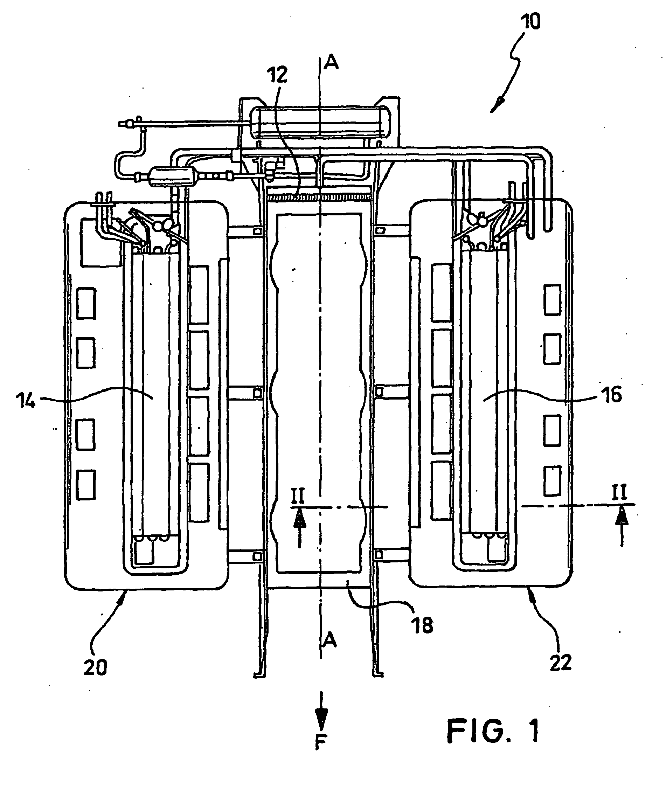

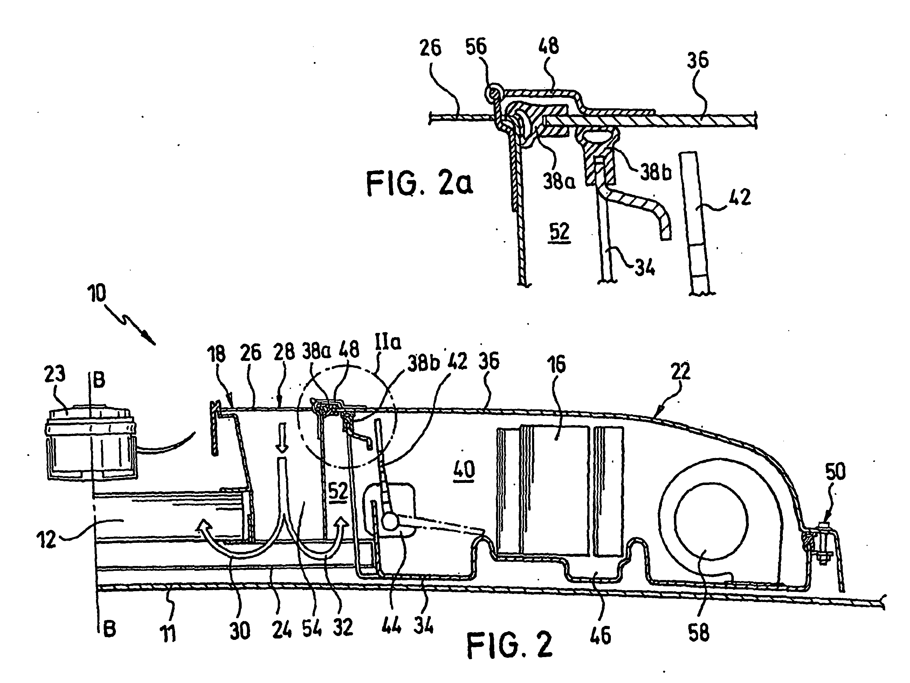

In Fig. 1 ist eine Klimaanlage 10 für Kraftfahrzeuge, insbesondere Omnibusse, zur Montage auf einem Dach 11 (Fig. 2) des Kraftfahrzeugs in Aufsicht gezeigt, mit einem zentral angeordneten Verflüssiger 12, einem ersten Verdampfer 14 und einem zweiten Verdampfer 16, wobei der zweite Verdampfer bezüglich einer Zentralachse A symmetrisch zum ersten Verdampfer 14 angeordnet ist. Der Verflüssiger 12 ist in einem Tragwerk 18 aufgenommen, der erste Verdampfer 14 ist in einem ersten Gehäuse 20 und der zweite Verdampfer 16 ist in einem zweiten Gehäuse 22 untergebracht. Von dem ersten Gehäuse 20 und dem zweiten Gehäuse 22 sind hier nur Teile dargestellt, um auch die Anordnung der Verdampfer 14, 16 in den Gehäusen 20, 22 zeigen zu können. Die Fahrtrichtung des Kraftfahrzeugs ist durch den Pfeil F beschrieben.

In Fig. 2 ist ein Querschnitt durch die Klimaanlage 10 in Richtung auf die Linie II-II von Figur 1 gezeigt. Aus zeichnerischen Gründen ist dabei nur die rechte Hälfte der Klimaanlage 10 mit dem im Tragwerk 18 angeordneten Verflüssiger 12 und dem im zweiten Gehäuse 22 untergebrachten zweiten Verdampfer 16 dargestellt. Die hier nicht dargestellte linke Hälfte mit dem ersten Verdampfer 14 im ersten Gehäuse 20 ist spiegelsymmetrisch zur Achse B-B aufgebaut und ansonsten mit der im folgenden beschriebenen rechten Hälfte der Klimaanlage 10 identisch.

Der liegend ausgeführte Verflüssiger 12 ist in dem Tragwerk 18 angeordnet, der auch einen über dem Verflüssiger 12 befindlichen Ventilator 23 aufnimmt. Unter dem Tragwerk 18 ist ein Trägerelement 24 angeordnet, durch welches das erste Gehäuse 20 und das zweite Gehäuse 22 miteinander verbunden sind sowie die Breite der gesamten Klimaanlage 10 festgelegt ist. Der Verflüssiger 12 hat nach unten keine Begrenzung durch eine Wanne, die Luft streicht direkt über das Dach 11 des Busses. Damit kann der Verflüssiger 12 mit dem Tragwerk 18 sehr schmal und leicht ausgeführt werden.

Der Verflüssiger 12 ist durch eine Verflüssigerabdeckung 26 nach oben hin geschützt. Die Verflüssigerabdeckung 26 ist in geeigneter Weise am Tragwerk 18 und am Trägerelement 24 befestigt. Neben der Abdeckfunktion hat die Verflüssigerabdeckung 26, die genauso wie das Trägerelement 24 ein einfaches Blechelement ist, die Aufgabe, das erste Gehäuse 20 und das zweite Gehäuse 22 miteinander zu verbinden und die Breite der gesamten Klimaanlage 10 festzulegen, wie unten noch genauer beschrieben wird.

In der Verflüssigerabdeckung 26 ist eine Lufteintrittsöffnung 28 angeordnet, die als gemeinsame Öffnung sowohl Luft für den Verflüssiger 12 als auch für den zweiten Verdampfer 16 ansaugt. Dabei wird ein erster Teilluftstrom 30 zum Verflüssiger 12, ein zweiter Teilluftstrom 32 zum zweiten Verdampfer 16 geführt.

Das den zweiten Verdampfer 16 aufnehmende zweite Gehäuse 22 besteht aus einer Wanne 34 und einer Haube 36, die durch ein Kopplungselement 50 miteinander verbunden sind. Das Kopplungselement 50 ist als Verschraubung ausgeführt, jedoch sind hier auch andere bekannte Verbindungsmechanismen einsetzbar. Zur wasserdichten Abdichtung dienen die Dichtelemente 38 a und 38b. Das Dichtelement 38a ist zwischen Haube 36 und Verflüssigerabdeckung 26, das Dichtelement 38b zwischen Haube 36 und Wanne 34 auf der dem Tragwerk 18 zugewandten Seite des zweiten Gehäuses 22 angeordnet. Im Inneren 40 des zweiten Gehäuses 22 ist weiter eine Luftklappe 42 mit einem Stellantrieb 44 angeordnet. In die Wanne 34 ist weiter ein Kondenswasserraum 46 eingeformt, der sich unmittelbar unter dem zweiten Verdampfer 16 befindet.

Im Folgenden soll unter besonderer Beachtung von Fig. 2a der Bereich zwischen dem zweiten Gehäuse 22 und dem Tragwerk 18 genauer beschrieben werden.

Zwischen der Haube 36 und der Verflüssigerabdeckung 26 ist ein Verbindungselement 48 angeordnet, das hier als Scharnier ausgebildet ist. Da die Schwenkachse 56 des als Scharnier ausgebildeten Verbindungselements 48 außen liegt, kann das Dichtelement 38a bei geeigneter geometrischer Gestaltung abrollen anstatt, wie sonst üblich, über die Verflüssigerabdeckung 26 zu gleiten. Durch das als Scharnier mit einer Schwenkachse 56 ausgeführte Verbindungselement 48 lässt sich das zweite Gehäuse 22 gegenüber dem Tragwerk 18 verschwenken und damit an den Radius des Dachs 11 des Kraftfahrzeugs anpassen. Das in der Länge variable beziehungsweise verstellbare Trägerelement 24 und die Verflüssigerabdeckung 26 ermöglichen dann die feste Positionierung der Gehäuse 20, 22 und des Tragwerks 18 auf eine besonders einfache und flexible Methode. Dazu werden das Trägerelement 24 und die Verflüssigerabdeckung 26 so zugerichtet, dass sie die entsprechenden Abstände zwischen den Gehäusen 20 und 22 überbrücken, um jeweils an diesen befestigt zu werden, um so die Breite der Klimaanlage 10 und die Stellung des Tragwerks 18 und der Gehäuse 20, 22 zueinander zu fixieren.

Durch das unterhalb des Verbindungselements 48 zur Abdichtung nach oben angeordnete Dichtelement 38a wird ein darunter liegender Frischluftraum 52 vor äußeren Einflüssen, insbesondere Regenwasser, geschützt. Die Lufteintrittsöffnung 28, das Tragwerk 18, das Dichtelement 38a und der Frischluftraum 52 legen einen Luftströmungsweg 54 fest, dessen Funktion weiter unten noch genauer beschrieben werden soll.

Das Verbindungselement 48 weist auch (nicht dargestellte) Führungselemente auf, die eine Bewegung des zweiten Gehäuses 22 in Bezug auf das Tragwerk 18 ermöglichen. Damit ist eine Ausrichtung zwischen der Haube 36 und der Verflüssigerabdeckung 26 in Fahrtrichtung F möglich.

Die Führungselemente sind so ausgebildet, dass eine Bewegung des zweiten Gehäuses 22 in Bezug auf das Tragwerk 18 quer zur Fahrtrichtung F möglich ist. Dies wird insbesondere dadurch erreicht, dass die Führungselemente Langlöcher quer zur Fahrtrichtung F aufweisen. Damit kann die Haube 36 gegenüber der Verflüssigerabdeckung 26 so verstellt werden, dass über die gesamte Länge der Klimaanlage 10 in Fahrtrichtung F ein konstanter Spalt für das Dichtelement 38a hergestellt wird. Da die Verflüssigerabdeckung 26 vorne und hinten am Dach 11 des Kraftfahrzeugs heruntergezogen ist, wird auch dort eine einfache Anpassung eines konstanten Spalts zwischen der Haube 36 und der Verflüssigerabdeckung 26 erreicht.

Die Klimaanlage 10 ist durch den gezeigten Aufbau besonders stabil, weil zum einen die Wannen 34 untereinander durch die Verflüssigerabdeckung 26 miteinander verbunden sind und die Gehäuse 20, 22 jeweils einen geschlossenen Kasten bilden. Damit werden Gewichtskräfte, die etwa über ein Hebezeug auf das Trägerelement 24 wirken, über die Wanne 34, das Kopplungselement 50, die Haube 36 und das Verbindungselement 48 in die Verflüssigerabdeckung 26 eingeleitet.

Im Folgenden soll die Entfernung von Wassertröpfchen aus der Frischluft im Luftströmungsweg 54 der Klimaanlage 10 anhand Figur 2 im Detail beschrieben werden.

Die durch die Lufteintrittsöffnung 28 vom Ventilator 23 und ein Gebläse 58 angesaugte Luft wird zuerst im Tragwerk 18 stark nach unten hin beschleunigt. Der Luftstrom teilt sich nun in den ersten Teilluftstrom 30 und den zweiten Teilluftstrom 32 auf. Nun findet eine Umkehrung der Luftströmung statt und die Teilluftströme 30, 32 werden nach oben gelenkt. Schwerere Wassertropfen folgen der Schwerkraft nach unten zum Dach 11 des Kraftfahrzeugs und können ablaufen. Die Frischluft weist nun nur noch kleine Wassertröpfchen auf. In der dargestellten Position der Luftklappe (Frischluftbetrieb) wird der zweite Teilluftstrom 32 über die Klappe 42 hinweg in das Innere 40 des zweiten Gehäuses 22 geleitet. Hier eventuell noch im zweiten Teilluftstrom 32 mitgeführte Wassertröpfchen fallen herunter und werden über die Luftklappe 42 in den Kondenswasserraum 46 geleitet, wo sie über die (nicht gezeigte) Kondenswasserabführung abfließen können, ohne den Innenraum des Fahrzeugs zu erreichen.

Zusammenfassend lässt sich feststellen, dass die erfindungsgemäße Klimaanlage die wirtschaftliche Herstellung einer großen Zahl von verschiedenen Varianten erlaubt, dabei ein geringes Gewicht und eine kompakte Bauweise aufweist und darüber hinaus eine optimale Entfernung von Wassertröpfchen aus der Frischluft ermöglicht.

### Bezugszeichenliste

- 10: Klimaanlage
- 11: Dach
- 12: Verflüssiger
- 14: erster Verdampfer
- 16: zweiter Verdampfer
- 18: Tragwerk
- 20: erstes Gehäuse
- 22: zweites Gehäuse
- 23: Ventilator
- 24: Trägerelement
- 26: Verflüssigerabdeckung
- 28: Lufteintrittsöffnung
- 30: erster Teilluftstrom
- 32: zweiter Teilluftstrom
- 34: Wanne
- 36: Haube
- 38a, b: Dichtelement
- 40: Inneres des Gehäuses
- 42: Luftklappe
- 44: Stellantrieb
- 46: Kondenswasserraum
- 48: Verbindungselement
- 50: Kopplungselement
- 52: Frischluftraum
- 54: Luftströmungsweg
- 56: Schwenkachse des Verbindungselements
- 58: Gebläse

## Patentansprüche

1. Klimaanlage (10) für Kraftfahrzeuge insbesondere Omnibusse zur Montage auf dem Dach (11) des Kraftfahrzeugs, mit einem in einem Tragwerk (18) angeordneten Verflüssiger (12) und einem in einem ersten Gehäuse (20) angeordneten ersten Verdampfer (14) und einem in einem zweiten Gehäuse (22) angeordneten zweiten Verdampfer (16), wobei der Verflüssiger (12) und die Verdampfer (14. 16) quer zur Fahrtrichtung (F) so nebeneinander angeordnet sind, dass sich der Verflüssiger (12) zwischen den Verdampfern (14, 16) befindet, wobei das Tragwerk (18) und die Gehäuse (20, 22) durch jeweils als Scharnier ausgeführte Verbindungselemente (48) miteinander verbunden sind, welche die Winkel und die relativen Stellungen des Tragwerks(18) und der Gehäuse (29, 22) zueinander so festlegen, dass sich die Klimaanlage(10) einer beliebigen gekrümmten Form des Dachs (1) anpassen lässt, und wobei unter dem Tragwerk (18) mindestens ein in der Länge variables bzw. verstellbares, dem Tragwerk (18) zugeordnetes Trägerelement (24) angeordnet ist, das eine unmittelbare Verbindung zwischen dem ersten Gehäuse (20) und dem zweiten Gehäuse (22) bildet.

2. Klimaanlage (10) nach Anspruch 1, **dadurch gekennzeichnet, dass** das Trägerelement (24) unter dem Tragwerk (18) angeordnet ist.

3. Klimaanlage (10) nach Anspruch 2, **dadurch gekennzeichnet, dass** zwischen dem Tragwerk (18) und dem jeweils benachbarten Gehäuse (20, 22) eine Lufteintrittsöffnung (28) angeordnet ist, wobei durch jede der Lufteintrittsöffnungen (28) jeweils ein erster Teilluftstrom (30) zum Verflüssiger (12) und ein zweiter Teilluftstrom (32) zum jeweils zugeordneten Verdampfer (14, 16) gelangt.

4. Klimaanlage (10) nach einem der Anspruche 2 bis 3, **dadurch gekennzeichnet, dass** zwischen dem Tragwerk (18) und dem jeweils benachbarten Gehäuse (20, 22) jeweils ein Dichtelement (38a) und ein Frischluftraum (52) angeordnet sind, wobei jedes Dichtelement (38a) den jeweils zugeordneten Frischluftraum (52) nach oben hin abdichtet.

5. Klimaanlage (10) nach Anspruch 4. **dadurch gekennzeichnet, dass** durch die Lufteintrittsoffnung (28) das Tragwerk (18) das Dichtelement (38a) und den Frischluftraum (52) ein Luftstromungsweg (54) festgelegt ist, wobei ein erster und ein zweiter Teilluftstrom (30. 32) im Luftströmungsweg (54) von der Lufteintrittsöffnung (28) im Tragwerk (18) nach unten gelangen und der zweite Teilluftstrom (32) uber den Frischluftraum (52) nach oben in das dem jeweiligen Frischluftraum (52) zugeordnete Gehäuse (20. 22) gelangt.

6. Klimaanlage (10) nach einem der vorhergehenden Anspruche **dadurch gekennzeichnet, dass** die Verbindungselemente (48) Führungselemente aufweisen, die eine Bewegung der Gehäuse (20. 22) in Bezug auf das Tragwerk (18) ermöglichen.

7. Klimaanlage (10) nach Anspruch 6, **dadurch gekennzeichnet, dass** die Führungselemente so ausgebildet sind, dass eine Bewegung der Gehäuse (20, 22) in Bezug auf das Tragwerk (18) in Fahrtrichtung (F) ermöglicht ist.

8. Klimaanlage (10) nach Anspruch 6 oder 7, **dadurch gekennzeichnet, dass** die Führungselemente so ausgebildet sind, dass eine Bewegung der Gehäuse (20, 22) in Bezug auf das Tragwerk (18) quer zur Fahrtrichtung (F) ermöglicht ist.

9. Klimaanlage (10) nach Anspruch 8, **dadurch gekennzeichnet, dass** die Führungselemente Langlöcher quer zur Fahrtrichtung (F) aufweisen.

10. Klimaanlage (10) nach einem der vorhergehenden Ansprüche, **dadurch gekennzeichnet, dass** das Tragwerk (18) eine Verflüssigerabdeckung (26) aufweist

## Claims

1. An air-conditioning installation (10) for motor vehicles, in particular buses, for mounting on a roof (11) of the motor vehicle, comprising a condenser (12) arranged in a support structure (18) and a first evaporator (14) arranged in a first housing (20) and a second evaporator (16) arranged in a second housing (22), wherein the condenser (12) and the evaporators (14, 16) are arranged in mutually adjacent relationship transversely with respect to the direction of travel (F) and the support structure (18) and the housings (20, 22) are connected together by connecting elements (48) in the form of hinges which establish the angles and the relative positions of the support structure (18) and the housings (20, 22) with respect to each other in such a way that the air-conditioning installation (10) can be matched to any curved shape of the roof (11) wherein associated with the support structure (18) is at least one support element (24) which is arranged under the support structure (18) and forms an immediate connection between the first housing (20) and the second housing (22).

2. An air-conditioning installation (10) according to claim 1 **characterised in that** the support element (24) is arranged under the support structure (18).

3. An air-conditioning installation (10) according to claim 2 **characterised in that** an air intake opening (28) is arranged between the support structure (18) and the respectively adjacent housing (20, 22), wherein a first partial air flow (30) passes to the condenser (12) and a second partial air flow (32) passes to the respectively associated evaporator (14, 16) through each respective one of the air intake openings (28).

4. An air-conditioning installation (10) according to one of claims 2 to 3 **characterised in that** arranged between the support structure (18) and the respectively adjacent housing (20, 22) are a sealing element (38a) and a fresh air chamber (52) respectively, wherein each sealing element (38a) seals upwardly the respectively associated fresh air chamber (52).

5. An air-conditioning installation (10) according to claim 4 **characterised in that** an air flow path (54) is established by the air intake opening (28), the support structure (18), the sealing element (38a) and the fresh air chamber (52), wherein first and second partial air flows (30, 32) pass downwardly in the air flow path (54) from the air intake opening (28) in the support structure (18) and the second partial air flow (32) passes by way of the fresh air chamber (52) upwardly into the housing (20, 22) associated with the respective fresh air chamber (52).

6. An air-conditioning installation (10) according to one of the preceding claims **characterised in that** the connecting elements (48) have guide elements which permit a movement of the housings (20, 22) with respect to the support structure (18).

7. An air-conditioning installation (10) according to claim 6 **characterised in that** the guide elements are so designed that a movement of the housings (20, 22) is permitted in relation to the support structure (18) in the direction of travel (F).

8. An air-conditioning installation (10) according to claim 6 or claim 7 **characterised in that** the guide elements are so designed that a movement of the housings (20, 22) is permitted in relation to the support structure (18) transversely with respect to the direction of travel (F).

9. An air-conditioning installation (10) according to claim 8 **characterised in that** the guide elements have slots transversely with respect to the direction of travel (F).

10. An air-conditioning installation (10) according to one of the preceding claims **characterised in that** the support structure (18) has a condenser cover (26).

## Revendications

1. Installation de climatisation (10) pour des véhicules automobiles, en particulier des omnibus, destinée à être montée sur un toit (11) du véhicule automobile, avec un condenseur (12) disposé dans une structure porteuse (18) et un premier évaporateur (14) disposé dans un premier boîtier (20) et un second évaporateur (16) disposé dans un second boîtier (22), dans laquelle le condenseur (12) et les évaporateurs (14, 16) sont disposés les uns à côté des autres perpendiculairement au sens de déplacement (F), la structure porteuse (18) et les boîtiers (20, 22) sont reliés les uns aux autres par des éléments de liaison (48) en forme des charnières, qui fixent les angles et les positions relatives de la structure porteuse (18) et des boîtiers (20, 22) les uns par rapport aux autres de telle manière que l'installation de climatisation (10) peut être adaptée à n'importe quelle forme courbe du toit (11), et au moins un élément de support (24) avec une longueur variable ou adaptable est disposé sous et associé à la structure porteuse (18) et forme une liaison immédiate entre le premier boîtier (20) et le second boîtier (22)

2. Installation de climatisation (10) selon la revendication 1, **caractérisée en ce que** l'élément de support (24) est disposé sous la structure porteuse (18).

3. Installation de climatisation (10) selon la revendication 2, **caractérisée en ce qu'**un orifice d'entrée d'air (28) est disposé entre la structure porteuse (18) et le boîtier respectivement adjacent (20, 22), un premier flux d'air partiel (30) parvenant jusqu'au condenseur (12) et un second flux d'air partiel (32) parvenant jusqu'à l'évaporateur respectivement associé (14, 16) à travers chacun des orifices d'entrée d'air (28).

4. Installation de climatisation (10) selon la revendication 2 ou 3, **caractérisée en ce qu'**un élément d'étanchéité (38a) et un compartiment d'air frais (52) sont disposés entre la structure porteuse (18) et le boîtier respectivement adjacent (20, 22), chaque élément d'étanchéité (38a) assurant l'étanchéité vers le haut du compartiment d'air frais (52) respectivement associé.

5. Installation de climatisation (10) selon la revendication 4, **caractérisée en ce qu'**un chemin d'écoulement d'air (54) est défini par l'orifice d'entrée d'air (28), la structure porteuse (18), l'élément d'étanchéité (38a) et le compartiment d'air frais (52), le premier et le second flux d'air partiel (30, 32) dans le chemin d'écoulement d'air (54) arrivant vers le bas à partir de l'orifice d'entrée d'air (28) dans la structure porteuse (18) et le second flux d'air partiel (32) arrivant vers le haut dans le boîtier (20, 22) associé au compartiment d'air frais respectif (52) par l'intermédiaire du compartiment d'air frais (52).

6. Installation de climatisation (10) selon l'une quelconque des revendications précédentes, **caractérisée en ce que** les éléments de liaison (48) comportent des éléments de guidage qui permettent un déplacement du boîtier (20, 22) par rapport à la structure porteuse (18).

7. Installation de climatisation (10) selon la revendication 6, **caractérisée en ce que** les éléments de guidage sont conçus de manière à permettre un déplacement du boîtier (20, 22) par rapport à la structure porteuse (18) dans le sens de déplacement (F).

8. Installation de climatisation (10) selon la revendication 6 ou 7, **caractérisée en ce que** les éléments de guidage sont conçus de manière à permettre un déplacement du boîtier (20, 22) par rapport à la structure porteuse (18) perpendiculairement au sens de déplacement (F).

9. Installation de climatisation (10) selon la revendication 8, **caractérisée en ce que** les éléments de guidage comportent des trous oblongs perpendiculairement au sens de déplacement (F).

10. Installation de climatisation (10) selon l'une quelconque des revendications précédentes, **caractérisée en ce que** la structure porteuse (18) comporte un couvercle de condenseur (26).
